# EUROPÄISCHE PATENTSCHRIFT

(11) **EP 0 513 566 B1**
(45) Veröffentlichungstag und Bekanntmachung des Hinweises auf die Patenterteilung: **23.08.1995**
(21) Anmeldenummer: 92106840.9
(22) Anmeldetag: 21.04.1992
(51) Int. Cl.: B65D 71/34, B65D 71/36

(54) **Mehrstückverpackung**
Multipack
Emballage en carton pour plusieurs articles

(30) Priorität: 22.04.1991 DE 9104905 U
(43) Veröffentlichungstag der Anmeldung: 19.11.1992
(73) Patentinhaber: Europa Carton Aktiengesellschaft, D-20095 Hamburg (DE)
(72) Erfinder: Skolik, Bernhard, W-2860 Osterholz-Scharmbeck (DE)
(74) Vertreter: Patentanwälte Hauck, Graalfs, Wehnert, Döring, Siemons

(56) Entgegenhaltungen:
- EP-A- 0 032 127
- EP-A- 0 044 169
- CA-A- 1 210 368
- FR-A- 2 581 970
- GB-A- 2 201 396
- US-A- 3 424 368
- US-A- 4 155 449
- US-A- 4 375 258
- US-A- 4 378 877

## Beschreibung

Gegenstand der Erfindung ist eine Mehrstückverpackung nach dem Oberbegriff des Anspruches 1.

Eine Mehrstückverpackung aus faltbarem Flachmaterial, insbesondere Karton, für Flaschen, Dosen oder ähnliche vorzugsweise wiederverwendbare oder wiederverwertbare Behälter, wobei der vorzugsweise einteilige Zuschnitt manschettenartig um die Behälter herumlegbar ist und zwei einander gegenüberliegende Wandabschnitte, einen Bodenabschnitt, einen Deckelabschnitt und stirnseitige Öffnungen zumindest teilweise schließende Stirnabschnitte aufweist, ist z.B. aus dem DE-GM 90 00 208 bekannt. Die stirnseitige Öffnungen des um die Behälter herumgelegten Zuschnittes verschließenden Stirnabschnitte werden nach diesem Stand der Technik von Bodenlaschen und über zwischenliegende Stege an diese gelenkten Stirnlaschen gebildet, die durch Schwenken der Bodenlaschen unter den Boden mittels der Stege gegen den unteren Randbereich der Behälter schwenkbar sind. Die eingeschwenkten Stirnlaschen können sowohl die Behälter im unteren Randbereich seitlich halten, als auch einen dort befindlichen EAN-Code abdecken. Die Stirnabschnitte können aber auch von frei gegeneinander klappbaren und aneinander vorzugsweise durch Kleben befestigbaren Boden- und Stirnlaschen gebildet sein. Die Erfindung schließt ferner Behälterträger gemäß EP-A 0 170 490 ein, bei denen die Behälter von in Öffnungen der Wandabschnitte bzw. des Bodenabschnittes hineingeklappten Laschen seitlich gehalten werden, weil die Erfindung ein seitliches Abstützen der Flaschen in den stirnseitigen Öffnungen der fertigen Packung voraussetzt.

Die vorbekannten Mehrstückpackungen werden durch Einreissen des Zuschnittes vorzugsweise im Bereich des Deckelabschnittes bzw. entlang einer Faltlinie geöffnet und sind danach in der Regel für eine weitere Aufbewahrung restlicher Behälter bzw. einen Behältertransport ungeeignet. Deshalb werden sie meist unmittelbar nach dem Öffnen entsorgt. Infolgedessen werden Behälter nach dem Öffnen der Verpackung überwiegend einzeln gehandhabt. Dies ist jedoch umständlich und fordert in der Regel zusätzliche Hilfsmittel wie Tragetaschen oder dergleichen, wenn die geleerten Behälter einem Entsorgungscontainer z.B. für Einwegflaschen oder Weißblech zugeführt werden oder als Mehrwegflaschen zur Flaschenannahmestelle zurückgetragen werden sollen. Wiederverwendbare oder wiederverwertbare Behälter werden jedoch mehr und mehr von Verbrauchern bzw. Händlern verlangt.

Diese Anforderungen werden grundsätzlich schon von einem Flaschenträger gemäß DE-GM 90 04 439 erfüllt, der einen zentralen Griffabschnitt sowie darum gruppierte Gefache für Flaschen aufweist, die von Längswänden, Längsstegen, Querstegen und Stirnwänden abgegrenzt werden. Bei einem derartigen Flaschenträger können die Flaschenhälse in Ausstanzungen von Klappen gehalten sein, die etwa senkrecht von den Griffabschnitten abgeklappt sind. Der Träger ist jedoch in der Herstellung relativ aufwendig und nur begrenzt stapelbar. Außerdem können die freiliegenden oberen Flaschenränder leicht verschmutzen.

Ein Flaschenträger der eingangs genannten Art ist aus der FR-A-2 581 970 bekannt. Die Öffnungsabschnitte dieser Konstruktion sind über Klapplinien mit den Stirnabschnitten verbunden, welche die stirnseitigen Öffnungen der Manschette vollständig schließen. Die Aufreißlinien sind von den Enden der Klapplinien aus bis zum oberen Rand der Wandabschnitte erstreckt und über den Deckelabschnitt miteinander verbunden. Infolgedessen können die Öffnungsabschnitte als prismenförmige Körper über die Stirnseiten nach außen weggeklappt werden. Dort stören sie bei Lagerung und Transport. Der zwischen den freigegebenen Öffnungen verbleibende Verbindungsabschnitt kann für den Flaschentransport zu schwach sein.

Davon ausgehend liegt der Erfindung die Aufgabe zugrunde, eine Mehrstückverpackung zu schaffen, die geöffnet Weniger Raum einnimmt.

Die Aufgabe wird durch Anspruch 1 gelöst. Vorteilhafte Ausgestaltungen sind in den Unteransprüchen angegeben.

Erfindungsgemäß ist vorgesehen, daß der Deckelabschnitt mindestens einen wenigstens zum Teil lösbar mit dem Zuschnitt verbundenen Öffnungsabschnitt hat, der nach dem Lösen seiner Verbindung mit dem Zuschnitt aus einer die Behälter zumindest teilweise überfangenden Sicherungsstellung in eine diese für eine Entnahme bzw. ein Wiedereinsetzen freigebende Freigabestellung bringbar ist und ein vom Öffnungsabschnitt abgegrenzter Verbindungsabschnitt des Deckelabschnitts die Wandabschnitte auch nach dem Lösen des Öffnungsabschnittes miteinander verbindet.

Erfindungsgemäß werden somit in der Mehrstückverpackung enthaltene Behälter unten vom Bodenabschnitt, seitlich von den Wandabschnitten und stirnseitig von den Stirnabschnitten gehalten. Oberseitig sind sie bei unversehrter Packung von den Öffnungsabschnitten gesichert, welche die Behälter zumindest teilweise überfangen. Durch Lösen der Öffnungsabschnitte können die Behälter oben freigegeben und aus der Packung entnommen werden. Davon wird jedoch ein vom Öffnungsabschnitt abgegrenzter Verbindungsabschnitt nicht beeinträchtigt, so daß die Manschettenform der Packung auch in Freigabestellung des Öffnungsabschnittes erhalten bleibt. Infolgedessen können Behälter zu Lagerungszwecken in der Verpackung verbleiben oder zu Transportzwecken wieder hineingesetzt werden, wobei Bodenabschnitt, Wandabschnitte sowie Stirnabschnitte eine Art Körbchen für das Zusammenfassen der Behälter bilden und der Verbindungsabschnitt als Tragegriff nutzbar ist.

Ferner ist der Öffnungsabschnitt wenigstens zum Teil über eine Aufreißlinie lösbar mit dem Zuschnitt verbunden. Die Aufreißlinie kann fertigungstechnisch besonders günstig z.B. durch Perforation in den Zuschnitt eingearbeitet werden, der im übrigen seine eingangs genannte Gestalt beibehalten kann. Dies schließt die Möglichkeit ein, jeden Öffnungsabschnitt durch Auftrennen der Aufreißlinie vollständig vom Zuschnitt abzutrennen. Bevorzugt hat die Aufreißlinie Schnittsegmente, dazwischen angeordnete Verbindungsstege und in Richtung des Auftrennfortschritts hinter jedem Verbindungssteg einen spitzwinklig in das jeweils nachgeordnete Schnittsegment mündenden Seiteneinschnitt. Diese Aufreißperforation sichert zugleich eine relativ feste Verbindung zwischen Öffnungsabschnitt und Zuschnitt und beim Auftrennen ein Auffangen des Risses durch den Verbindungsabschnitt mittels desjeweils nachgeordneten Seiteneinschnittes. Hierdurch ergibt sich nach dem Auftrennen eine relativ scharfe Trennlinie.

Ferner ist der Öffnungsabschnitt teilweise über eine Klapplinie mit dem Zuschnitt verbunden, so daß er nach dem Lösen seiner Verbindung mit dem Zuschnitt aus einer Schließstellung in die Freigabestellung klappbar ist. Dies hat insbesondere den Vorteil, daß der Öffnungsabschnitt nicht als separates Abfallteil anfällt, sondern die gesamte Mehrstückverpackung nach dem Gebrauch zusammenhängend entsorgt werden kann. Die Klapplinie erstreckt sich quer zu den Wandabschnitten und ist beidenends mit einer Aufreißlinie verbunden. Die Klapplinie schützt dann den angrenzenden Verbindungsabschnitt vor einem Einreißen beim Öffnen der Packung.

Die Aufreißlinie erstreckt sich in die Wandabschnitte hinein, so daß in Freigabestellung des Öffnungsabschnittes auch Bereiche des Wandabschnittes freigegeben werden und ein Zugriff auf die Flaschen erleichtert wird. Außerdem erstreckt sich die Klapplinie bis zu dem Wandabschnitt und sind damit verbundene Aufreißlinien in den Wandabschnitten bis zu freien Seitenrändern derselben erstreckt und grenzen darin Abreißlaschen ab. Die Aufreißlinie kann hierdurch auf relativ breite Bereiche der Wandabschnitte begrenzt werden, was der Festigkeit der Mehrstückverpackung auch nach dem Aufreißen zugute kommt.

Der Öffnungsabschnitt ist von unten gegen den angrenzenden Verbindungsabschnitt klappbar, so daß er mit dem Verbindungsabschnitt und gegebenenfalls angrenzenden Wandabschnitt eine Materialanhäufung bilden kann, die der Kraftüberleitung von Verbindungsabschnitt in die Wandabschnitte zugute kommt. Hierzu kann der Öffnungsabschnitt im wesentlichen deckungsgleich gegen den Verbindungsabschnitt klappbar sein.

An jeder stirnseitigen Öffnung des Zuschnitts sind angrenzende Öffnungsabschnitte und ein zwischenliegender Verbindungsabschnitt des Deckelabschnitts ausgebildet. Diese symmetrische Öffnungsanordnung begünstigt Entnahme und Wiedereinsetzen der Behälter und verleiht der geöffneten Packung ein ansprechendes Aussehen.

Eine Fortbildung sieht in beiden Öffnungsabschnitten vorzugsweise angrenzend an den Verbindungsabschnitt ausgebildete Eingriffsöffnungen vor, die den Transport insbesondere der ungeöffneten Packung fördern, ohne eine Schwächung des Verbindungsabschnittes zu bewirken.

Schließlich sind gemäß einer Weiterbildung im Übergangsbereich von Deckel- und Wandabschnitten, insbesondere von Öffnungs- und Wandabschnitten, Halteöffnungen für den oberen Behälterrand ausgebildet. Die Halteöffnungen nehmen die oberen Ränder der eng von der Mehrstückverpackung umschlossenen Behälter auf, so daß diese praktisch unverrückbar in der geschlossenen Packung gehalten werden. Sobald der zugeordnete Öffnungabschnitt aus der Sicherungsstellung in die Freigabestellung bewegt wird, werden die oberen Behälterränder freigegeben und läßt eine die Behälter zusammenrückende Spannung nach. Hierdurch können diese leichter aus der Verpackung entnommen werden, auch wenn Behälter unterhalb dem Verbindungsabschnittes angeordnet sind.

Weitere Einzelheiten und Vorteile des Gegenstandes der Erfindung ergeben sich aus der nachfolgenden Beschreibung der zugehörigen Zeichnungen, die eine bevorzugte Ausführungsform eines Verpackungszuschnittes sowie eine daraus hergestellte Packung zeigen. In den Zeichnungen zeigen:
- Fig. 1: einen flach ausgebreiteten Zuschnitt der Mehrstückverpackung in der Draufsicht;
- Fig. 2: Flaschenpackung ungeöffnet (Öffnungsabschnitte in Sicherungsstellung) mit demselben Zuschnitt um Flaschen gelegt in perspektivischer Ansicht;
- Fig. 3: dieselbe Flaschenpackung vor dem Schließen von Stirnabschnitten in derselben Perspektive;
- Fig. 4: dieselbe Flaschenpackung geöffnet (Öffnungsabschnitte in Freigabestellung) in derselben Perspektive;
- Fig. 5: vollständig entleerte Mehrstückverpackung geöffnet in derselben Perspektive;
- Fig. 6: dieselbe entleerte Mehrstückverpackung nach dem Einklappen der Öffnungsabschnitte in derselben Perspektive;
- Fig. 7: dieselbe Mehrstückverpackung erneut mit Flaschen befüllt in derselben Perspektive.

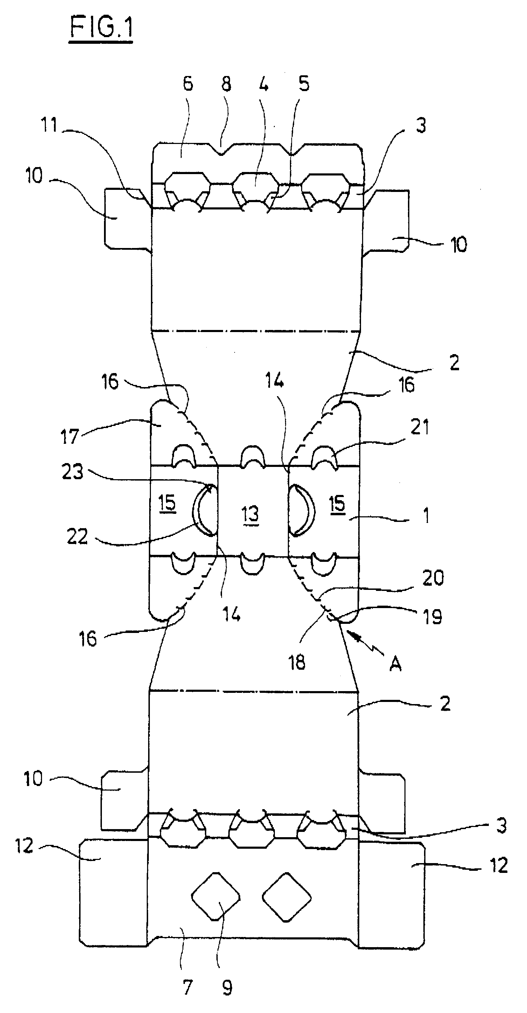

Der Zuschnitt gemäß Fig. 1 hat beidseitig eines Deckelabschnittes 1 Wandabschnitte 2, die etwa in der Mitte eine Biegelinie zwecks Anpassung an den Übergangsbereich vom Bauch zum Hals einer Flasche aufweisen. Die Wandabschnitte 2 haben jeweils außen angelenkte Randabschnitte 3, die eine Anpassung an den unteren Rand einer Flasche ermöglichen. Die Randabschnitte 3 sind jeweils mit drei Fußöffnungen 4 für den unteren Flaschenrand versehen, die wiederum Flaschenerfassungslaschen 5 zum Vorspannen bzw. Halten des unteren Flaschenrandes aufweisen.

Die Fußöffnungen 4 erstrecken sich zum Teil in angelenkte Bodenabschnitte 6, 7 hinein, die jeweils mit zwei komplementären Pinolenausstanzungen 8, 9 für einen Pinolenträger mit zwei Pinolen pro Segment versehen sind.

Jeder Wandabschnitt 2 hat in Bodenabschnittnähe beidseitig angelaschte Stirnabschnitte 10 mit einer Fußkante 11, die angrenzend an einen Randabschnitt 3 zu einer Klappverbindungslinie mit dem Wandabschnitt 2 geneigt ist. Von den beiden, bei der fertigen Verpackung miteinander verbundenen Bodenabschnitten 6, 7, hat der größere 7 beidseits weitere Stirnabschnitte 12 mit Rechteckform, die ebenfalls über Klapplinie angelenkt sind.

Der Deckelabschnitt 1 hat einen zentralen Verbindungsabschnitt 13, der beidseits über Klapplinien 14 mit jeweils einem Öffnungsabschnitt 15 verbunden ist. Jede Klapplinie 14 ist beidenends mit jeweils einer Aufreißlinie 16 verbunden, die sich im oberen Bereich des Wandabschnittes bis zu einem freien Seitenrand desselben erstreckt und darin jeweils eine Abreißlasche 17 abgrenzt. Jede Anfreißlinie 16 besteht aus einer Folge von Schnittsegmenten 18 und diese voneinander trennenden Verbindungsstegen 19 und einem in Richtung des Auftrennfortschritts A hinter jedem Verbindungssteg 19 spitzwinklig in das jeweils nachgeordnete Schnittsegment mündenden Seiteneinschnitt 20.

Im Übergangsbereich zwischen Deckelabschnitt 1 und Wandabschnitt 2 sind an einer Faltlinie Halteöffnungen 21 für einen oberen Flaschenrand angeordnet, die jeweils einer Fußöffnung 4 zugeordnet sind. Zwei Halteöffnungen 21 erstrecken sich etwas in den Verbindungsabschnitt 13 hinein und vier weitere sind in den Öffnungsabschnitten 15 sowie den gelenkig damit verbundenen Abreißlaschen 17 ausgebildet.

Ferner ist der Deckelabschnitt 1 mit zwei Eingriffsöffnungen 22 vergehen, die jeweils in einem Öffnungsabschnitt 15 unmittelbar neben der Klapplinie 14 angeordnet ist und größtenteils von einer einklappbaren Lasche 23 abgedeckt ist.

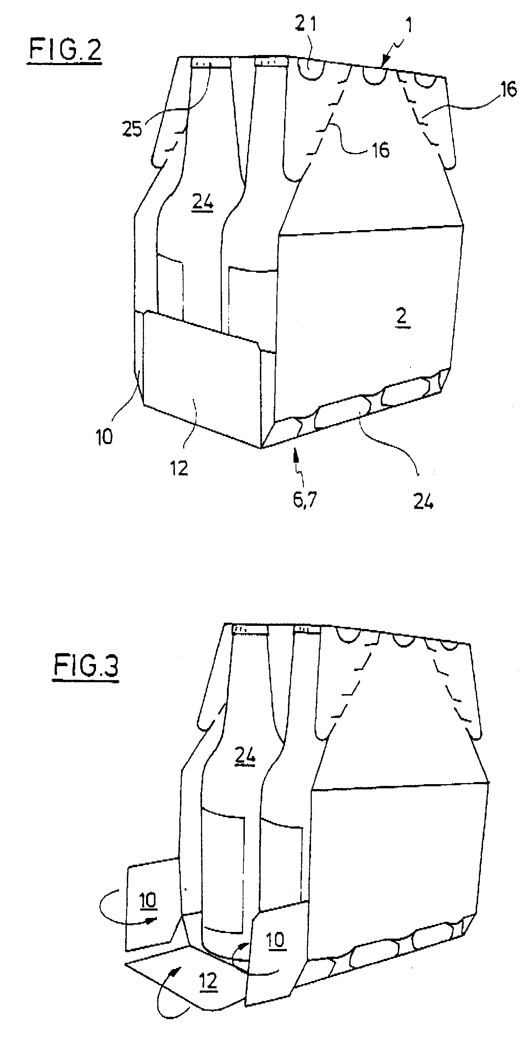

Aus der Fig. 2 ist ersichtlich, daß in der fertigen Flaschenpackung befindliche Flaschen 24 an ihren oberen Flaschenrändern 25 von Verbindungsabschnitt und Öffnungsabschnitten des Deckelabschnittes 1 gesichert sind, wobei sie mit dem Flaschenrand in den Halteöffnungen 21 gehalten sind. Die Wandabschnitte 2 bilden gemeinsam mit den Bodenabschnitten 6, 7 sowie den geschlossenen Stirnabschnitten 10, 12 eine körbchenförmige Aufnahme für den unteren Bereich der Flasche 24, die mit einem unteren Flaschenrand in die Fußöffnungen 24 eingreifen. Aufgrund ihrer ebenen Deckel- und Bodenabschnitte 1, 6, 7 hat die Packung günstige Stapelungseigenschaften. Die Aufreißlinien 16 in den Wandabschnitten 2 können vertikale Beanspruchungen in ausreichendem Maß zerstörungsfrei ertragen.

Wie aus der Fig. 3 für einen Hersteilungsschritt der Flaschenpackung ersichtlich ist, wird diese nach dem Umhüllen der Flaschen 24 durch Einklappen der Stirnabschnitte 10, 12 in der durch Pfeile symbolisierten Richtung unten geschlossen. Die Klappabschnitte 10, 12 werden einfach mittels eines Klebstoffes aneinander befestigt.

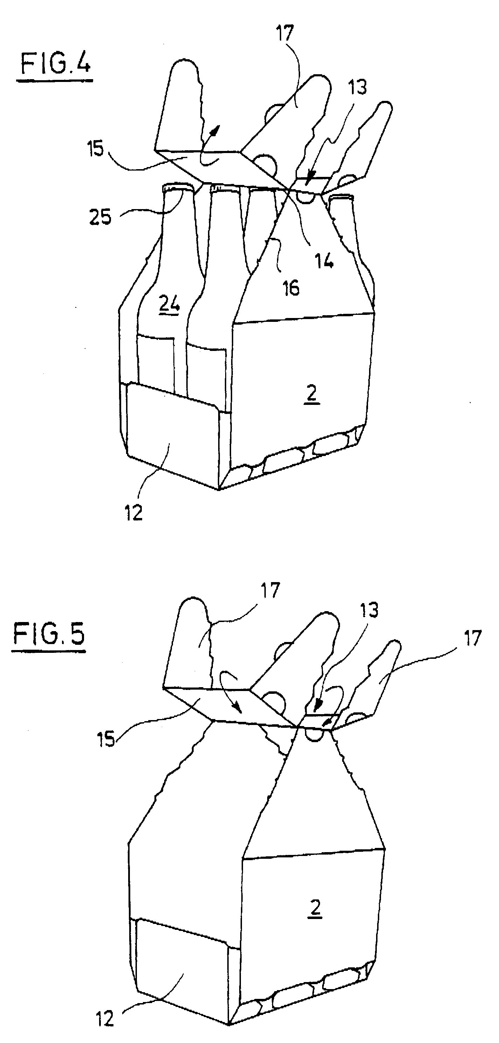

Die Fig. 4 zeigt, daß das Aufreißen der Aufreißlinien 16 nicht zur vollständigen Zerstörung der Verpackung führt. Die Wandabschnitte 2 werden nämlich in einem oberen, zentralen Bereich und der Deckelabschnitt im Bereich des Verbindungsabschnittes 13 durch den Aufreißvorgang nicht beeinträchtigt. Deshalb bleibt grundsätzlich die Manschettenform der Verpackung erhalten. Durch das Aufreißen der Aufreißlinien 16 werden jedoch die Abreißlaschen 17 von den Wandabschnitten 2 getrennt, so daß diese gemeinsam mit den Öffnungsabschnitten 15 um die Klapplinien 14 zu den Verbindungsabschnitten 13 in Richtung des eingezeichneten Pfeiles klappbar sind. Danach sind die oberen Flaschenränder 25 der beiden äußeren Flaschenreihen freigegeben, so daß diese Flaschen 24 bequem entnommen werden können. Zur Vergrößerung des Eingriffsbereiches können die Abreißlaschen 17 um ihre Verbindungslinien mit den Öffnungslaschen 15 in die gezeichnete Stellung hochgeklappt sein.

Nach dem vollständigen Entleeren der Verpackung können die Öffnungsabschnitte 15 sowie die angelenkten Abreißlaschen 17 gemäß Fig. 5 in Pfeilrichtung nach innen und unter den Verbindungsabschnitt 13 gefaltet werden. Beim Öffnen der Packung fallen somit kleinerlei Kartonreste an, die separat entsorgt werden müßten.

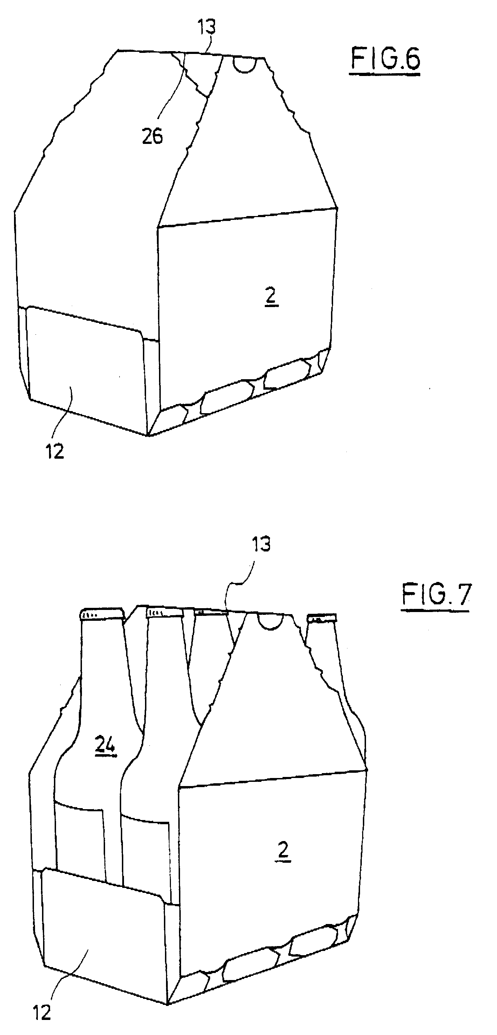

Fig. 6 zeigt, daß dadurch ein Körbchen entsteht, in das man die leeren Flaschen leicht hineinstellen kann. Durch das Falten der Kartonreste unter den Verbindungsabschnitt 13 ist dort ein Griffbereich 26 mit einer Kartonanhäufung gebildet. Nach Entfernen der Kronkorken ist die Höhe der Flaschen 24 verringert, so daß diese gemäß Fig. 7 bequem in die Verpackung zurückgestellt und unter den Griffbereich 26 geschoben werden können. Die Flaschen 24 und die Kartonverpackung können nun vom Verbraucher bequem entsorgt werden. Die im Oberbereich der Verpackung verringerten Tragquerschnitte tragen die Beanspruchung durch entleerte Flaschen 24 sicher.

## Patentansprüche

1. Mehrstückverpackung aus faltbarem Flachmaterial, insbesondere Karton, für Flaschen, Dosen oder ähnliche vorzugsweise wiederverwendbare oder wiederverwertbare Behälter, wobei der vorzugsweise einteilige Zuschnitt manschettenartig um die Behälter (24) herumlegbar ist und zwei einander gegenüberliegende Wandabschnitte (2), einen Bodenabschnitt (6, 7), einen Deckelabschnitt (1) und stirnseitige Öffnungen zumindest teilweise schließende Stirnabschnitte (10, 12) aufweist, der Deckelabschnitt (1) an jeder stirnseitigen Öffnung des Zuschnittes angrenzend einen zum Teil lösbar mit dem Zuschnitt verbundenen Öffnungsabschnitt (15) hat, der teilweise über eine Klapplinie (14) mit dem Zuschnitt verbunden ist, die sich quer und bis zu den Wandabschnitten (2) erstreckt und beidenends mit Aufreißlinien (16) verbunden ist, die sich in den Wandabschnitten (2) erstrecken, wobei der Öffnungsabschnitt (15) nach dem Aufreißen der Aufreißlinien (16) um die Klapplinie (14) aus einer die Behälter zumindest teilweise überfangenden Sicherungsstellung in eine diese für eine Entnahme bzw. ein Wiedereinsetzen freigebende Freigabestellung klappbar ist und ein zwischen den beiden Öffnungsabschnitten (15) liegender Verbindungsabschnitt (13) die Wandabschnitte (2) auch nach dem Lösen der Öffnungsabschnitte (15) miteinander verbindet, dadurch gekennzeichnet, daß sich die Klapplinien (14) beider Öffnungsabschnitte (15) den Verbindungsabschnitt (13) begrenzend im Deckelabschnitt (1) erstrecken, daß sich die damit verbundenen Aufreißlinien (16) in den Wandabschnitten bis zu den freien Seitenrändern derselben erstrecken und darin Abreißlaschen (17) abgrenzen und daß beide Öffnungsabschnitte (15) um ihre Klapplinien (16) von unten gegen den Verbindungsabschnitt (13) klappbar sind.

2. Mehrstückverpackung nach Anspruch 1, dadurch gekennzeichnet, daß jede Aufreißlinie (16) Schnittsegmente (18), dazwischen angeordnete Verbindungsstege (19) und in Richtung des Auftrennfortschritts (A) hinter jedem Verbindungssteg (19) einen spitzwinklig in das jeweils nachgeordnete Schnittsegment (18) mündenden Seiteneinschnitt (20) aufweist.

3. Mehrstückverpackung nach Anspruch 1 oder 2, dadurch gekennzeichnet, daß der Öffnungsabschnitt (15) im wesentlichen deckungsgleich gegen den Verbindungsabschnitt (13) klappbar ist.

4. Mehrstückverpackung nach einem der Ansprüche 1 bis 3, dadurch gekennzeichnet, daß in beiden Öffnungsabschnitten (15) angrenzend an den Verbindungsabschnitt (13) Eingriffsöffnungen (22) ausgebildet sind.

5. Mehrstückverpackung nach einem der Ansprüche 1 bis 4, dadurch gekennzeichnet, daß im Übergangsbereich der Deckel- und Wandabschnitte (1, 2), insbesondere von Öffnungs- und Wandabschnitten (15, 17), Halteöffnungen (21) für den oberen Behälterrand (25) ausgebildet sind.

## Claims

1. A multipack of foldable sheet material, in particular carton, for bottles, cans or similar containers which are preferably reusable or recycable, the preferably integral blank being adapted to be applied about the container (24) in a collar-like manner and including a pair of opposite wall portions (2), a bottom portion (6,7), a cover portion (1) and end portions (10,12) at least partially closing endwise openings, the cover portion (1) including adjacent each endwise opening of the blank an opening portion (15) connected to the blank so as to be at least partially releasable, which opening portion is connected to the blank partially via a fold line (14) which extends transversely and to the wall portions (2) and is connected at both ends with score lines (16) which extend within the wall portions (2), the opening portion (15), after the score lines (16) have been torn being adapted to be folded about the fold line (14) from a securing position extending at least partially across the container to a release position releasing the container for removing and inserting a container, and a connecting portion (13) which is disposed between both opening portions (15) connecting the wall portions (2) to each other also after the opening portions (15) have been released, characterized in that the fold lines (14) of both opening portions (15) extend within the cover portion (1) so as to limit the connecting portion (13), that the score lines (16) connected thereto extend within the wall portions to the free lateral edges thereof and define therein tear-off flaps (17), and that both opening portions (15) are adapted to be folded about their fold lines (16) from below against the connecting portion (13).

2. A multipack according to claim 1, characterized in that each score line (16) comprises segmental cuts (18), connecting webs (19) disposed therebetween, and a lateral cut (20) in the direction of separation progess (A) behind each connecting web (19), said lateral cut (20) terminating in the respective following segmental cut (18) under an acute angle.

3. A multipack according to claim 1 or claim 2, characterized in that the opening portion (15) is adapted to be folded against the connection portion (13) so as to be substantially congruent therewith.

4. A multipack according to any of claims 1 to 3, characterized in that inlet openings (22) are formed in both opening portions (15) adjacent to the connecting portion (13).

5. A multipack according to any of claims 1 to 4, characterized in that retaining openings (21) for the upper container margin (25) are formed in the transition area of the cover and wall portions (1,2), in particular of the opening and wall portions (15,17).

## Revendications

1. Emballage pour plusieurs articles, en matériau plat pliable, en particulier en carton, destiné à des bouteilles, boîtes ou autres conteneurs similaires, de préférence réutilisables ou recyclables, dans lequel :
le flan découpé, de préférence d'un seul tenant, peut être placé autour des conteneurs (24) à la manière d'un étui et comprend deux sections formant parois (2) en face l'une de l'autre, une section formant fond (6, 7), une section formant couvercle (1) et des sections frontales (10, 12) obturant au moins partiellement des ouvertures frontales,
la section formant couvercle (1) présente, en bordure de chaque ouverture frontale du flan, une section d'ouverture (15) liée au flan de manière partiellement détachable de celui-ci,
ladite section d'ouverture est reliée au flan partiellement suivant une ligne de rabattement (14) qui s'étend transversalement jusqu'aux sections formant parois (2) et qui à ses deux extrémités, est reliée à des lignes de déchirage (16) s'étendant dans les sections formant parois (2),
la section d'ouverture (15) peut, lorsque les lignes de déchirage (16) sont déchirées, être pliée suivant la ligne de rabattement (14), depuis une position de sécurité enveloppant au moins partiellement les conteneurs, jusque dans une position de distribution libérant les conteneurs et permettant de les prendre ou de les replacer dans l'emballage,
et une section de liaison (13), située entre les deux sections d'ouverture (15), relie les sections formant parois (2) l'une avec l'autre même une fois les sections d'ouverture (15) détachées,
caractérisé en ce que les lignes de rabattement (14) des deux sections d'ouverture (15) s'étendent dans la section formant couvercle (1) en délimitant la section de liaison (13),
en ce que les lignes de déchirage (16), qui sont reliées auxdites lignes de rabattement, s'étendent dans les sections formant parois jusqu'aux bords latéraux libres de ces dernières et y délimitent des languettes de déchirage (17),
et en ce que les deux sections d'ouverture (15) peuvent être rabattues par dessous contre la section de liaison (13) par pliage suivant leurs lignes de rabattement (16).

2. Emballage pour plusieurs articles selon la revendication 1, caractérisé en ce que chaque ligne de déchirage (16) présente des segments de coupe (18), des segments de liaison (19) intercalés entre lesdits segments de coupe, et derrière chaque segment de liaison (19), dans le sens du déchirage (A), une découpe latérale (20) aboutissant au segment découpé (18) en formant un angle aigu.

3. Emballage pour plusieurs articles selon la revendication 1 ou 2, caractérisé en ce que la section d'ouverture (15) peut être rabattue contre la section de liaison (13) en venant sensiblement en recouvrement sur celle-ci.

4. Emballage pour plusieurs articles selon l'une quelconque des revendications 1 à 3, caractérisé en ce que des ouvertures de préhension (22) sont formées en bordure de la section de liaison (13), dans les deux sections d'ouverture (15).

5. Emballage pour plusieurs articles selon l'une quelconque des revendications 1 à 4, caractérisé en ce que des ouvertures de maintien (21), destinées au bord supérieur (25) des conteneurs, sont formées dans le secteur de raccordement entre les sections formant couvercle et parois (1, 2), en particulier entre les sections d'ouverture (15) et les sections formant parois (17).
